# EUROPEAN PATENT APPLICATION

(11) **EP 4 723 263 A1**
(43) Date of publication of application: **08.04.2026**
(21) Application number: 24814984.1
(22) Date of filing: 09.04.2024
(51) Int. Cl.: H01M 10/04, H01M 4/38, H01M 4/48, H01M 10/0587, H01M 50/15, H01M 50/103, H01M 50/342, H01M 50/463, H01M 50/474, H01M 50/477

(54) **POWER STORAGE DEVICE**

(30) Priority: 31.05.2023 JP 2023090435
(71) Applicant: Panasonic Intellectual Property Management Co., Ltd., Kadoma-shi, Osaka 571-0057 (JP)
(72) Inventor: NISHINO Hajime, kadoma-shi, Osaka 571-0057 (JP); GESHI Shinya, kadoma-shi, Osaka 571-0057 (JP); YOSHIZAWA Hiroshi, kadoma-shi, Osaka 571-0057 (JP); NAITO Keisuke, kadoma-shi, Osaka 571-0057 (JP)
(74) Representative: Eisenführ Speiser
(86) International application number: PCT/JP2024/014397
(87) International publication number: WO 2024/247497

(57) **Abstract**

This power storage device (10) is provided with: an electrode body (14) which is obtained by winding a positive electrode (11), a negative electrode (12), and a separator (13); a polygonal tubular case (20) which has a polygonal tubular part and an opening provided at one end of the tubular part, and which houses the electrode body (14) and an electrolytic solution; and a polygonal sealing body (30) which closes the opening of the case (20). A groove-shaped thin part (34A) which releases a gas inside the case (20) to the outside is provided at a corner of a bottom surface part (20B) of the case (20) or at a corner of the sealing body (30).

## Description

### TECHNICAL FIELD

The present disclosure relates to a power storage device.

### BACKGROUND ART

A rectangular battery has been known as a form of a power storage device. The rectangular battery has a rectangular prism-shaped case (e.g., PATENT LITERATURE 1). The rectangular battery is space-efficient, and allows storage in a stable state within a storage space. Accordingly, the rectangular battery is suitable for reducing the size and thickness of an electric device.

### CITATION LIST

### PATENT LITERATURE

PATENT LITERATURE 1: Japanese Patent Publication No. 3709134

### SUMMARY

Use of the rectangular battery described above certainly improves the space efficiency. However, the rectangular battery is required to further improve the reliability in order to achieve high capacity and high output.

Accordingly, it is an advantage of the present disclosure to provide a power storage device that can improve the reliability.

A power storage device according to the present disclosure comprises: an electrode assembly in which a positive electrode, a negative electrode, and a separator are wound; a polygonal prism-shaped case that includes a prism portion having a polygonal prism shape, and an opening portion provided at one end of the prism portion, and stores the electrode assembly and an electrolytic solution; and a sealing assembly that has a polygonal shape and blocks the opening portion of the case, wherein a corner portion of a bottom surface portion of the case or a corner portion of the sealing assembly is provided with an explosion-proof mechanism that releases gas in the case to the outside.

According to the power storage device in the present disclosure, the reliability can be improved.

### BRIEF DESCRIPTION OF DRAWINGS

FIG. 1 is a schematic sectional view showing a power storage device that is an example of an embodiment.
FIG. 2 is an exploded perspective view showing the power storage device that is the example of the embodiment.
FIG. 3 is a plan view showing first explosion-proof mechanisms.
FIG. 4 is an exploded perspective view showing a power storage device that is another example of the embodiment.
FIG. 5 is an exploded perspective view showing a power storage device that is another example of the embodiment.
FIG. 6 is a plan view showing another example of the first explosion-proof mechanisms.
FIG. 7 is a plan view showing another example of the first explosion-proof mechanisms.
FIG. 8 is a plan view showing another example of the first explosion-proof mechanisms.
FIG. 9 is a plan view showing another example of the first explosion-proof mechanisms.
FIG. 10 is a plan view showing another example of the first explosion-proof mechanisms.
FIG. 11 is a plan view showing another example of the first explosion-proof mechanism.
FIG. 12 is a plan view showing another example of the first explosion-proof mechanism.
FIG. 13 is a schematic sectional view showing a power storage device that is another example of the embodiment.
FIG. 14 is a schematic sectional view showing a power storage device that is another example of the embodiment.

### DESCRIPTION OF EMBODIMENTS

An example of an embodiment of the present disclosure is described in detail below. In the following description, specific shapes, materials, directions, numerical values and the like are examples to facilitate understanding of the present disclosure, and can be changed as appropriate depending on the application, purpose, specifications and the like.

### [Power Storage Device (End Surface Current Collection Structure)]

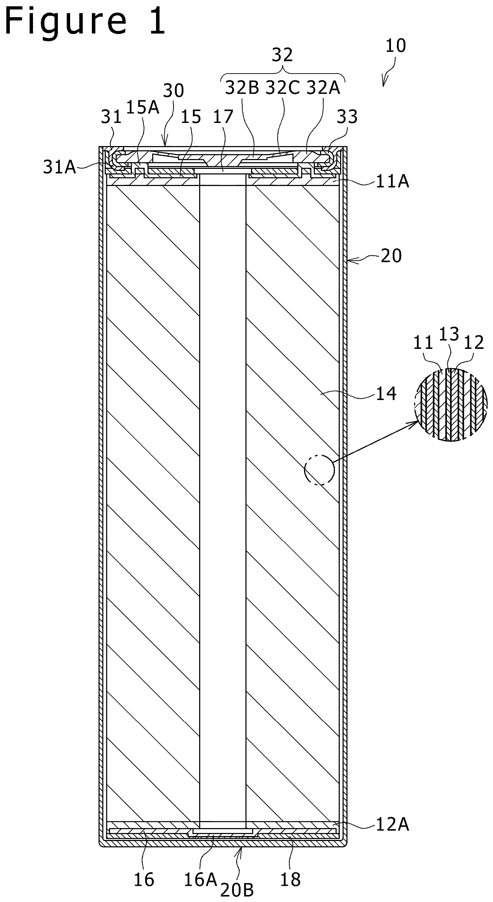

Referring to FIGS. 1 to 3, a power storage device 10 that is an example of an embodiment is described.

As shown in FIG. 1, the power storage device 10 comprises: a cylindrical-shaped electrode assembly 14 that includes a strip-shaped positive electrode 11 and a strip-shaped negative electrode 12 that are wound with a strip-shaped separator 13 interposed therebetween; electrolyte (not shown); a case 20 that has a polygonal prism shape, and stores the electrode assembly 14 and the electrolyte; and a sealing assembly 30 that has a polygonal shape and blocks an opening portion of the case 20. Although the details are described later, the power storage device 10 can improve the reliability.

The present embodiment is the combination of the case 20 having a quadrangular prism shape as a polygonal prism shape, and the sealing assembly 30 having a quadrangular prism shape as a polygonal shape. However, the present disclosure is not limited to this. For example, a combination of a triangular prism case and a triangular sealing assembly, a combination of a pentagonal prism case and a pentagonal sealing assembly, a combination of a hexagonal prism case and a hexagonal sealing assembly, or a combination of a parallelogram prism case and a parallelogram sealing assembly may be adopted. Note that this similarly applies to a case of representing a polygonal shape in the following description.

Note that the description is sometimes made below along the axial direction of the power storage device 10. The description is sometimes made in accordance with the upper side or the lower side in the axial direction.

The positive electrode 11 includes a strip-shaped positive electrode core material, and a positive electrode mixture layer formed on at least one surface of the positive electrode core material. On the upper end side of the positive electrode 11 (on the one end side of the positive electrode 11 in the width direction), a positive electrode core exposed portion 11A where no positive electrode mixture layer is provided in the positive electrode core material protrudes. The positive electrode core material may be made of metal foil that is stable in the potential range of the positive electrode 11, such as of aluminum or an aluminum alloy, a film on which the metal is disposed as the surface layer, or the like.

The positive electrode mixture layer includes a positive-electrode active material, a conductive agent such as acetylene black, and a binding agent such as polyvinylidene fluoride, and is formed on each of the opposite surfaces, for example. For example, a lithium transition metal composite oxide is used as the positive-electrode active material.

The negative electrode 12 may include, for example, a negative electrode core, and a negative electrode mixture layer formed on the surface of negative electrode core. Instead of the negative electrode mixture layer of the negative electrode 12, metal lithium foil may be adopted. The negative electrode 12 may include a negative electrode core, and lithium metal may deposit on the surface of the negative electrode core by charging. The negative electrode 12 includes a negative electrode core exposed portion 12A where no negative electrode composite layer (or metal lithium foil) is formed is formed on one end of the negative electrode core in the width direction.

Preferably, in a case where the negative electrode 12 includes a negative electrode mixture layer (or metal lithium foil), the negative electrode mixture layer (or metal lithium foil) is formed on each of the opposite surfaces of the negative electrode core. The negative electrode core may be made of metal foil that is stable in the potential range of the negative electrode 12, such as of copper or a copper alloy, a film on which the metal is disposed as the surface layer, or the like. The negative electrode mixture layer includes a negative-electrode active material, and a binding agent such as styrene-butadiene rubber (SBR). For example, graphite, a silicon- based material or the like are used as the negative-electrode active material.

In a case where the negative-electrode active material includes a silicon-based material, the power storage device 10 can have a higher capacity because the silicon-based material can absorb more lithium ions than graphite can. Examples of the silicon-based material may include Si and an alloy including Si, an Si oxide represented by SiOₓ (0.5 ≤ x ≤ 1.6), an Si-containing material where Si fine particles are dispersed in a lithium silicate phase represented by Li_{2y}SiO_{(2+y)} (0 < y <2), and an Si-containing material where Si fine particles are dispersed in a carbon phase. Preferably, the Si-based material contains SiOₓ (0.5 ≤ x ≤ 1.6). Preferably, in the negative electrode mixture layer, the ratio of the Si-based material to the total mass of the negative-electrode active material is greater than or equal to 10% by weight in view of improving the battery capacity and preventing the charging and discharging cycle characteristics from being degraded.

In the case where the silicon-based material is adopted as the negative-electrode active material of the negative electrode 12 as described above, the volume expansion and contraction of the electrode assembly 14 due to charging and discharging of the power storage device 10 increase. Preferably, irregularities are formed on the surface of the separator 13. The example where irregularities are formed on the surface may be a case where protruding projections are formed in an aligned manner, or a case where a plurality of grooves are formed along the axial direction. Thus, the volume expansion and contraction of the electrode assembly 14 due to charging and discharging of the power storage device 10 can be accommodated.

The electrode assembly 14 is formed to have a cylindrical shape with a wound core (not shown) where the positive electrode 11 and the negative electrode 12 are wound with the separator 13 interposed therebetween in a state where the positive electrode core exposed portion 11A and the negative electrode core exposed portion 12A deviate from each other to protrude on the opposite sides in the axial direction. The wound core in the present embodiment has the cylindrical shape, and is formed to have a circular shape viewed from the axial direction. However, the present disclosure is not limited to this. Similar to the case 20 and the sealing assembly 30, the wound core may be formed to have a polygonal shape viewed from the axial direction. For example, the wound core may have a quadrangular prism shape viewed from the axial direction.

The electrolyte is a non-aqueous electrolyte, and includes a non-aqueous solvent, and electrolyte salt dissolved in the non-aqueous solvent. The non-aqueous solvent may be, for example, any of esters, ethers, nitriles, and amides, and a composite solvent of two or more of them, etc. The non-aqueous solvent may contain a halogen-substituted product made by replacing at least some of hydrogen atoms of the solvent with halogen atoms, such as fluorine. Examples of the non-aqueous solvent include ethylene carbonate (EC), ethyl methyl carbonate (EMC), dimethyl carbonate (DMC), a mixed solvent of them and the like. The electrolyte salt may be, for example, lithium salt, such as LiPF₆.

On the upper side of the electrode assembly 14 there are provided a positive electrode current collector plate 15 to which the positive electrode core exposed portion 11A is joined, and an upper insulating plate 17 disposed on the upper side of the positive electrode current collector plate 15. Projections 15A that protrude upward, penetrate through a through-hole of the upper insulating plate 17, and are joined to an after-mentioned sealing plate 32 are formed on the positive electrode current collector plate 15. Accordingly, the positive electrode 11 and the sealing plate 32 are electrically connected to each other, and the sealing plate 32 functions as a positive electrode external terminal.

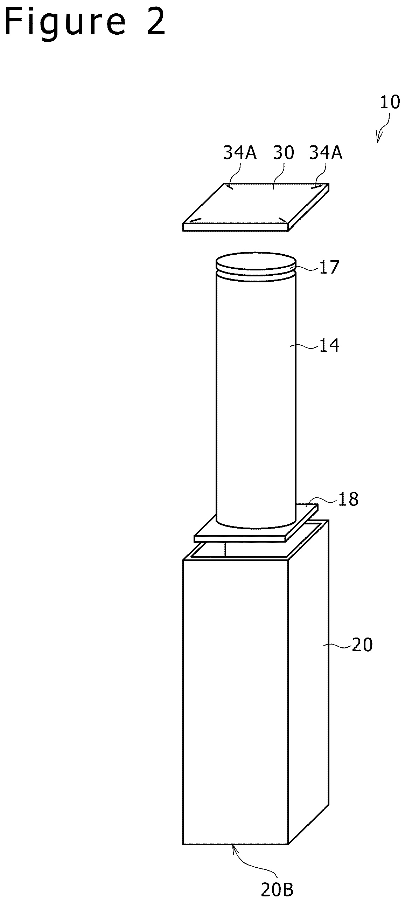

As shown in FIG. 2, the upper insulating plate 17 is formed to have a circular shape with a diameter substantially identical to that of the electrode assembly 14 viewed from the axial direction. Although the details are described later, this can improve the reliability because the upper insulating plate 17 does not hamper exhaust on gas exhaust paths in case of an abnormality of the power storage device 10.

Referring again to FIG. 1, a negative electrode current collector plate 16 to which the negative electrode core exposed portion 12A is joined, and a lower insulating plate 18 disposed under the negative electrode current collector plate 16 are provided on the lower side of the electrode assembly 14. Projections 16A that protrude downward, penetrate through the through-hole of the lower insulating plate 18, and are joined to the inner surface of an after-mentioned bottom surface portion 20B of the case 20 are formed on the negative electrode current collector plate 16. Accordingly, the negative electrode 12 and the case 20 are electrically connected to each other, and the case 20 functions as a negative electrode external terminal.

As shown in FIG. 2, the lower insulating plate 18 is formed to have a polygonal shape (a quadrangular shape in the present embodiment), which is similar to the bottom surface portion 20B of the case 20, viewed from the axial direction. Although the details are described later, this can prevent the lower insulating plate 18 from hampering exhaust on the gas exhaust paths and prevent the case 20 from exploding. Note that the power storage device in the present disclosure does not necessarily require the lower insulating plate 18.

### [Case]

Referring again to FIG. 1, the case 20 is a metal container that includes a prism portion having a polygonal prism shape (a quadrangular prism shape in the present embodiment), and an opening portion on the upper end side of the prism portion. According to such a configuration, when an abnormality occurs in the power storage device 10 and the internal pressure increases, corner portion spaces of the case 20 that are gaps between the electrode assembly 14 and the prism portion of the case 20 can be used as gas exhaust paths. Accordingly, a greater number of gas exhaust paths in case of an abnormality in the power storage device 10 can be formed, and the reliability of the power storage device 10 can be improved.

The opening portion of the case 20 is blocked by the sealing assembly 30 described later. The power storage device 10 is sealed by laser-welding the opening portion of the case 20 and the periphery of the sealing assembly 30. The case 20 includes the bottom surface portion 20B having a polygonal shape (a quadrangular shape in the present embodiment) viewed from the axial direction.

### [Sealing Assembly]

The sealing assembly 30 is formed to have a polygonal shape (a quadrangular shape in the present embodiment) viewed from the axial direction. The sealing assembly 30 includes: a lid plate 31 provided with first explosion-proof mechanisms at the corner portions; the sealing plate 32 that is provided at the center of the lid plate 31 and is provided with a second explosion-proof mechanism; and a gasket 33 provided at the outer periphery of the sealing plate 32. Note that in the case where the first explosion-proof mechanisms are provided, the second explosion-proof mechanism is not necessarily provided. In the following description, simple representation as the explosion-proof mechanism includes both the first explosion-proof mechanisms and the second explosion-proof mechanism. Note that the configuration where the first explosion-proof mechanisms are provided at the corner portions of the sealing assembly (or the case) means that with respect to lines drawn from the center of the sealing plate (or the case) to the corners, the first explosion-proof mechanisms deviate to the respective corners away from the center. By providing the first explosion-proof mechanisms at the corner portions, gas can be easily released through the gaps between the corner portions of the case (prism portion) and the electrode assembly. Preferably, they overlap the gap between the electrode assembly and the prism portion of the case in the axial direction.

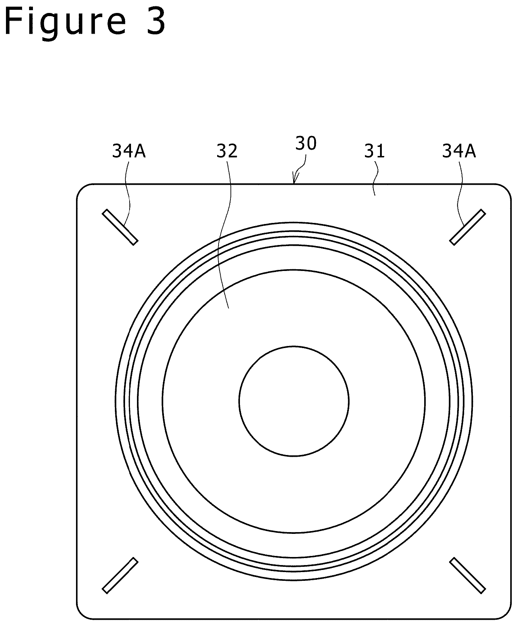

The lid plate 31 is formed to have a polygonal shape (a quadrangular shape in the present embodiment) viewed from the axial direction. The periphery of the lid plate 31 is fixed by laser welding to the opening portion of the case 20. At the corner portions of the lid plate 31, groove-shaped thin-wall portions 34A that fracture and form exhaust ports in case of an abnormality of the power storage device 10 are formed as the first explosion-proof mechanisms (see FIGS. 2 and 3). The thin-wall portions 34A are described later in detail.

An annular portion 31A formed by making the center of the lid plate 31 cylindrically extend to the inside of the case 20 is formed on the lower surface of the lid plate 31. The sealing plate 32 is disposed on the inner peripheral side of the annular portion 31A via the annular gasket 33, and presses the gasket 33 by a crimping process of bending the distal end portion of the annular portion 31A inward, thus attaching the sealing plate 32 to the lid plate 31.

The sealing plate 32 is formed to have a circular shape viewed from the axial direction. The sealing plate 32 includes: an outer peripheral portion 32A crimped and fixed to the annular portion 31A of the lid plate 31; a center portion 32B formed at the inside of the outer peripheral portion 32A; and a thin-wall portion 32C that intervenes between the outer peripheral portion 32A and the center portion 32B, and serves as the second explosion-proof mechanism. For example, the thickness of the thin-wall portion 32C is less than the thicknesses of the outer peripheral portion 32A and the center portion 32B. Accordingly, when an abnormality occurs in the power storage device 10, the internal pressure increases, and the sealing assembly 30 is pressed outward from the case 20, the thin-wall portion 32C preferentially fractures in the sealing plate 32, and an exhaust port is formed in the sealing plate 32.

As shown in FIGS. 2 and 3, the groove-shaped thin-wall portions 34A as the first explosion-proof mechanisms are formed along the diagonal lines of the quadrangular-shaped sealing assembly 30. Accordingly, when an abnormality occurs in the power storage device 10, the internal pressure increases, and the sealing assembly 30 is pressed outward from the case 20, the thin-wall portions 34A preferentially fracture, and exhaust ports are formed in the sealing assembly 30.

By forming the first explosion-proof mechanisms (thin-wall portions 34A) at the respective corner portions of the sealing assembly 30, the corner portion spaces of the case 20 can be used as the gas exhaust paths, and exhaust can be achieved through the first explosion-proof mechanisms above the corner portion spaces. Accordingly, a greater number of exhaust paths in case of an abnormality in the power storage device 10 can be formed, and the reliability of the power storage device 10 can be improved.

As shown in FIG. 2, the upper insulating plate 17 close to the first explosion-proof mechanisms has a surface extending in the directions perpendicular to the axial direction, the surface having a smaller area than that of the lower insulating plate 18 that is farther to the first explosion-proof mechanisms viewed from the axial direction than the upper insulating plate 17 is. The upper insulating plate 17 is formed to have, for example, a circular shape. According to such a configuration, in the directions perpendicular to the axial direction, a gap between the upper insulating plate 17 and the case 20 tends to form. When an abnormality occurs in the power storage device 10 and the internal pressure increases, the gap can prevent the upper insulating plate 17 from hampering exhaust on the gas exhaust paths. Accordingly, the reliability of the power storage device 10 can be improved.

On the other hand, the lower insulating plate 18 is formed to have a polygonal shape (a quadrangular shape in the present embodiment). According to such a configuration, when an abnormality occurs in the power storage device 10 and the internal pressure increases, the lower insulating plate 18 can protect the bottom surface portion 20B of the case 20 from heat damage through the gas exhaust paths. Accordingly, the bottom surface portion 20B can be prevented from fracturing before the first explosion-proof mechanisms. The operation reliability of the first explosion-proof mechanism can be improved. Accordingly, the reliability of the power storage device 10 can be improved.

### [Another Embodiment (Exhaust Paths)]

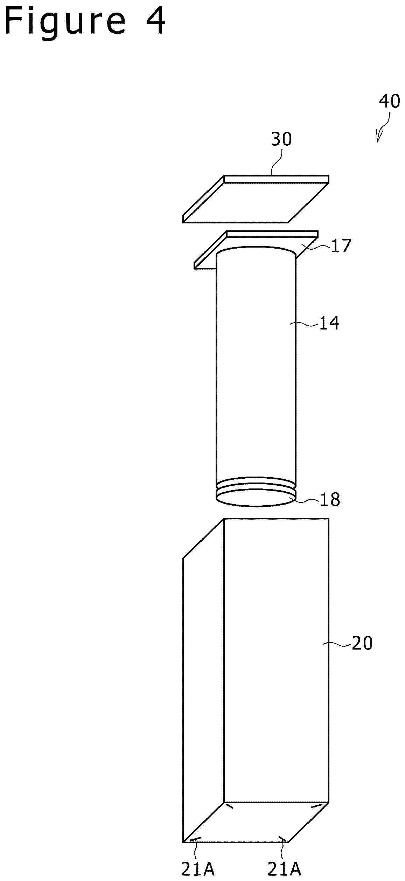

Referring to FIG. 4, a power storage device 40 that is another example of the embodiment is described. In the following description, components similar to those in the aforementioned power storage device 10 are assigned the similar symbols and described, or the description is omitted.

In the power storage device 40, instead of the explosion-proof mechanisms described above, first explosion-proof mechanisms are provided in the bottom surface portion 20B of the case 20. The first explosion-proof mechanisms are formed as groove-shaped thin-wall portions 21A in the bottom surface portion 20B of the case 20. The thin-wall portions 21A in the present embodiment are formed along the diagonal lines of the bottom surface portion 20B of the quadrangular-shaped case 20. Accordingly, when an abnormality occurs in the power storage device 40, the internal pressure increases, and the bottom surface portion 20B of the case 20 is pressed outward from the case 20, the thin-wall portions 21A preferentially fracture, and exhaust ports are formed in the bottom surface portion 20B of the case 20.

The lower insulating plate 18 closer to the thin-wall portions 21A as the first explosion-proof mechanisms has a surface extending in the directions perpendicular to the axial direction, the surface having a smaller area than that of the upper insulating plate 17 that is farther to the first explosion-proof mechanisms viewed from the axial direction than the lower insulating plate 18 is. The lower insulating plate 18 is formed to have, for example, a circular shape. According to such a configuration, in the directions perpendicular to the axial direction, a gap between the lower insulating plate 18 and the case 20 tends to form. When an abnormality occurs in the power storage device 40 and the internal pressure increases, the gap can prevent the lower insulating plate 18 from hampering exhaust on the gas exhaust paths. Accordingly, the reliability of the power storage device 40 can be improved.

On the other hand, the upper insulating plate 17 away from the thin-wall portions 21A as the first explosion-proof mechanisms is formed to have, for example, a polygonal shape (a quadrangular shape in the present embodiment) viewed from the axial direction. According to such a configuration, when an abnormality occurs in the power storage device 40 and the internal pressure increases, the upper insulating plate 17 protects the sealing assembly 30 from heat damage due to gas through the gas exhaust paths. The sealing assembly 30 can be prevented from fracturing before the first explosion-proof mechanisms. Accordingly, the operation reliability of the first explosion-proof mechanisms can be improved, and the reliability of the power storage device 40 can be improved.

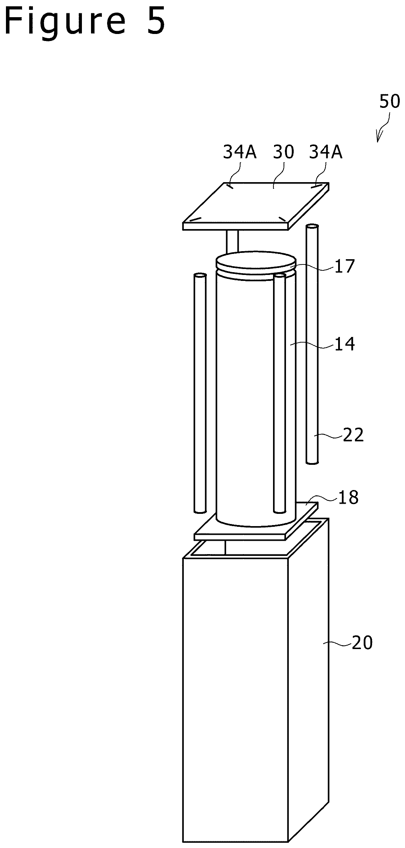

Referring to FIG. 5, a power storage device 50 that is another example of the embodiment is described. In the following description, components similar to those in the aforementioned power storage device 10 are assigned the similar symbols and described, or the description is omitted.

In the power storage device 50, hollow pipes 22 are respectively disposed in corner portion spaces that are gaps between the electrode assembly 14 and the case 20 described above. Gaps are formed between the upper ends of the pipes 22 and the sealing assembly 30. On the other hand, gaps are formed between the lower ends of the pipes 22 and the lower bottom surface portion 20B of the case 20.

According to such a configuration, when an abnormality occurs in the power storage device 50 and the internal pressure increases, the pipes 22 can be used as gas exhaust paths. Accordingly, the exhaust paths in case of an abnormality in the power storage device 50 can be easily secured, and the reliability of the power storage device 50 can be improved. Cutouts may be formed respectively at the end portions of the pipes 22 in the axial direction. The cutouts facilitate gas flow into the pipes 22 even if the ends of the pipes 22 in the axial direction are in contact with the bottom surface portion 20B, the lower insulating plate 18, the upper insulating plate 17, the sealing assembly 30 and the like, for example.

Note that the power storage device 50 may have a configuration where the first explosion-proof mechanisms are the thin-wall portions 34A formed in the lid plate 31 of the sealing assembly 30, the upper insulating plate 17 has a circular shape viewed from the axial direction, and the lower insulating plate 18 has a polygonal shape viewed from the axial direction. The power storage device 50 may have a configuration where the first explosion-proof mechanisms are the thin-wall portions 21A formed in the bottom surface portion 20B of the case 20, the upper insulating plate 17 has a polygonal shape viewed from the axial direction, and the lower insulating plate 18 has a circular shape viewed from the axial direction.

### [Another Embodiment (First Explosion-Proof Mechanisms)]

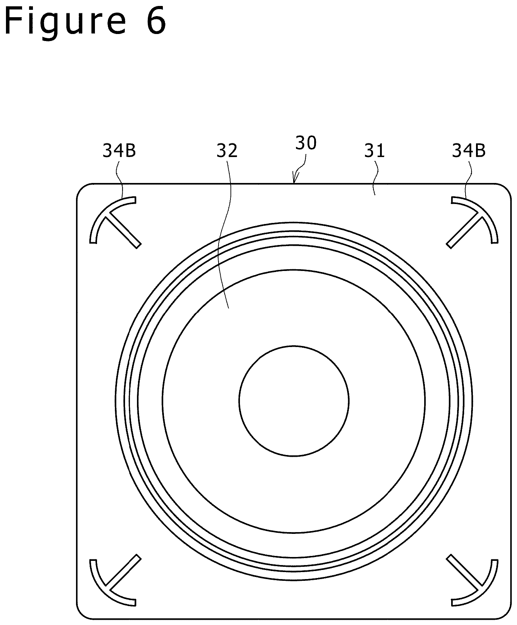

Referring to FIGS. 6 to 12, first explosion-proof mechanisms as another example of the embodiment are described. While thin-wall portions 34B to 34G formed in the lid plate 31 of the sealing assembly 30 are described below, thin-wall portions 21B to 21G formed in the bottom surface portion 20B of the case 20 may have similar shapes.

As shown in FIG. 6, groove-shaped thin-wall portions 34B as the first explosion-proof mechanisms are respectively formed at corner portions of the lid plate 31 of the quadrangular-shaped sealing assembly 30, along the diagonal lines of the lid plate 31 and the outer periphery of the lid plate 31.

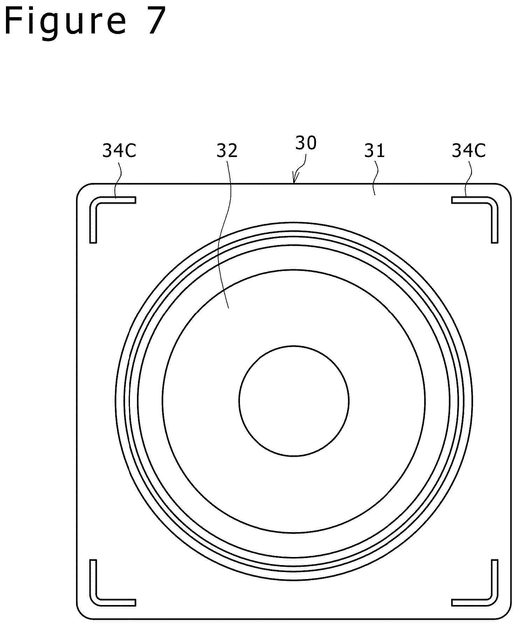

As shown in FIG. 7, groove-shaped thin-wall portions 34C as the first explosion-proof mechanisms are respectively formed at corner portions of the lid plate 31 of the quadrangular-shaped sealing assembly 30, along the outer periphery of the lid plate 31.

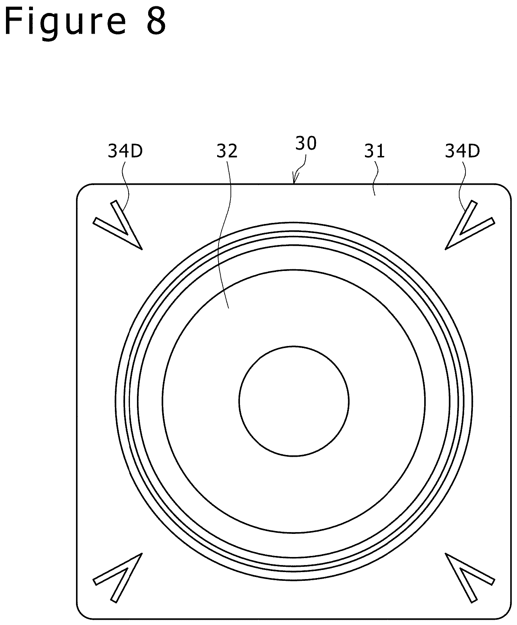

As shown in FIG. 8, groove-shaped thin-wall portions 34D as the first explosion-proof mechanisms are respectively formed at corner portions of the lid plate 31 of the quadrangular-shaped sealing assembly 30 so as to have V-shapes viewed from the center of the lid plate 31.

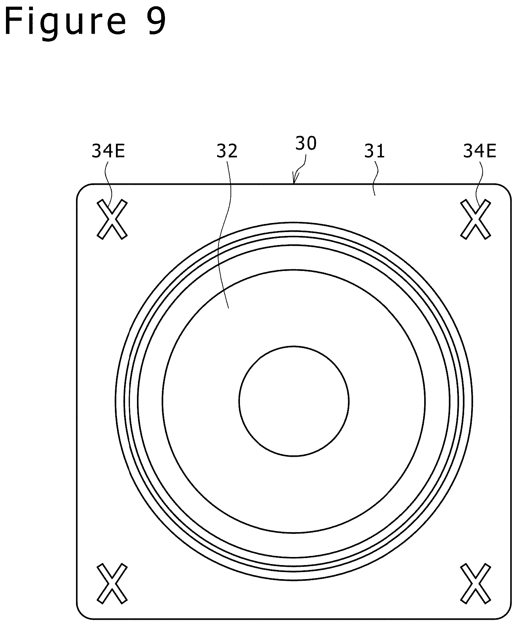

As shown in FIG. 9, groove-shaped thin-wall portions 34E as the first explosion-proof mechanisms are respectively formed at corner portions of the lid plate 31 of the quadrangular-shaped sealing assembly 30 so as to have X-shapes. Parts of the thin-wall portions 34E are formed along the diagonal lines of the lid plate 31.

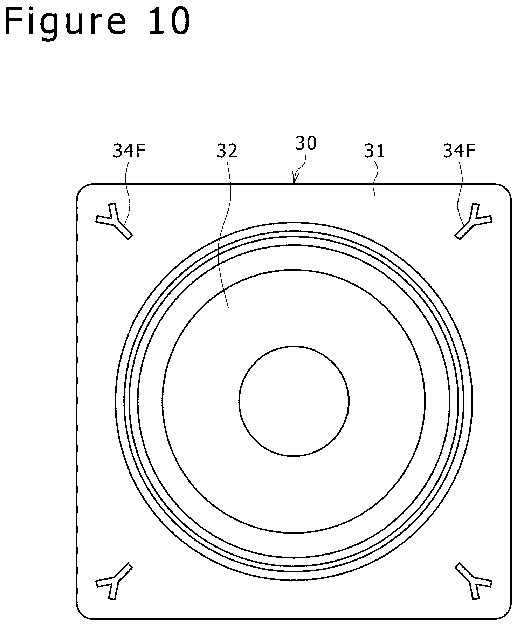

As shown in FIG. 10, groove-shaped thin-wall portions 34F as the first explosion-proof mechanisms are respectively formed at corner portions of the lid plate 31 of the quadrangular-shaped sealing assembly 30 so as to have Y-shapes viewed from the center of the lid plate 31. Parts of the thin-wall portions 34F are formed along the diagonal lines of the lid plate 31.

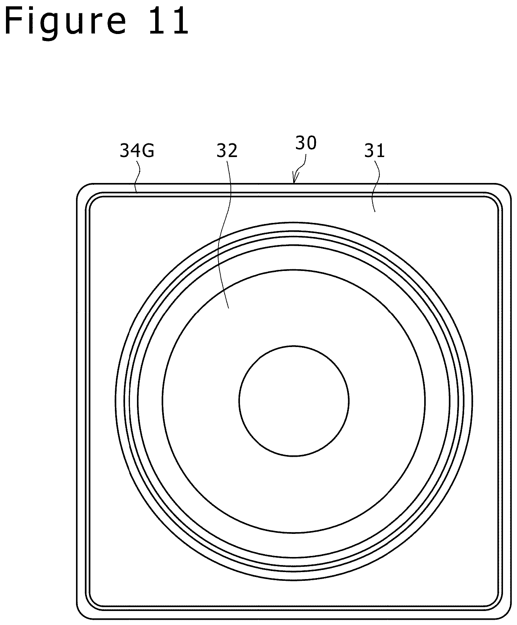

As shown in FIG. 11, a groove-shaped thin-wall portion 34G as a first explosion-proof mechanism is formed along the outer periphery of the lid plate 31, and a portion of the lid plate 31 along each corner portion is thinner than the other parts.

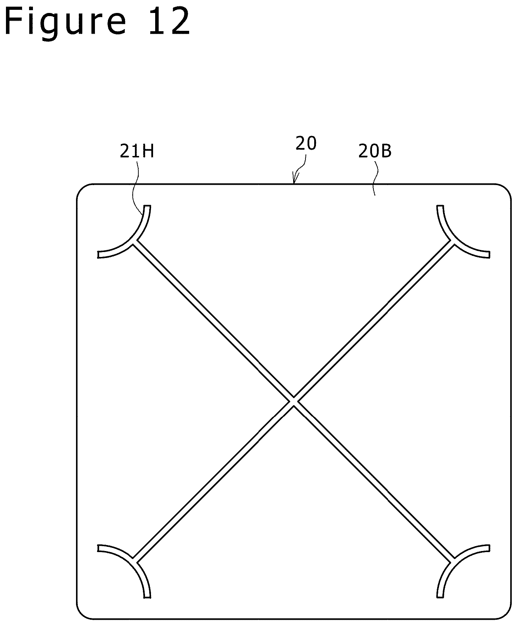

As shown in FIG. 12, groove-shaped thin-wall portions 21H as first explosion-proof mechanisms are respectively formed at the corner portions of the bottom surface portion 20B of the quadrangular-shaped case 20 so as to have Y-shapes viewed from the center of the bottom surface portion 20B. At the center of the bottom surface portion 20B, these thin-wall portions 21H are coupled to each other.

### [Another Embodiment (Power Storage Device (Tab Structure))]

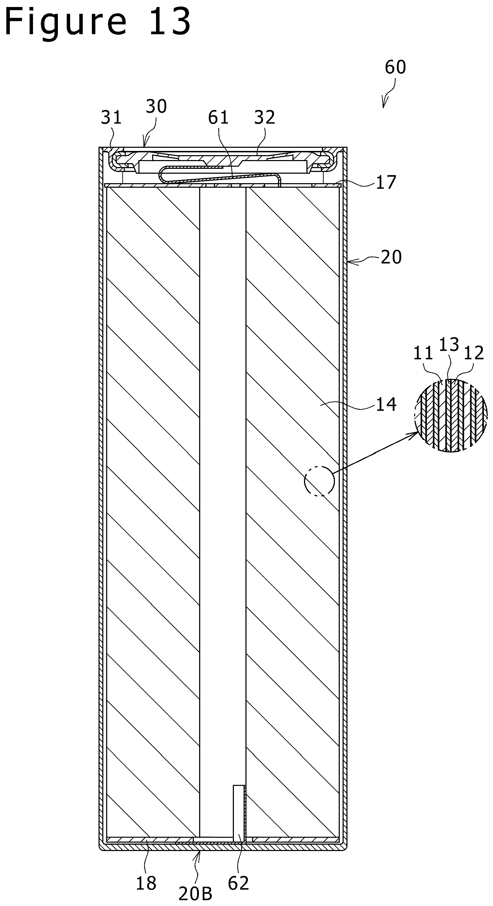

Referring to FIG. 13, a power storage device 60 that is another example of the embodiment is described. In the following description, components similar to those in the aforementioned power storage device 10 are assigned the similar symbols and described, or the description is omitted.

The power storage device 60 comprises: the cylindrical-shaped electrode assembly 14 that includes the strip-shaped positive electrode 11 and the strip-shaped negative electrode 12 that are wound with the strip-shaped separator 13 interposed therebetween; an electrolyte (not shown); the case 20 that has a polygonal prism shape (a quadrangular shape in the present embodiment) and stores the electrode assembly 14 and the electrolyte; and the sealing assembly 30 that has a polygonal shape (a quadrangular shape in the present embodiment), and blocks the opening portion of the case 20. The upper insulating plate 17 is provided on the upper side of the electrode assembly 14. On the other hand, the lower insulating plate 18 is provided under the electrode assembly 14.

A positive electrode tab 61 extends from the upper end of the electrode assembly 14. The positive electrode tab 61 is connected to, for example, the center portion of the positive electrode 11 in the longitudinal direction. The positive electrode tab 61 passes through the through-hole of the upper insulating plate 17, extends toward the sealing assembly 30, and is welded to the lower surface of the sealing plate 32. Accordingly, the sealing plate 32 functions as a positive electrode external terminal.

On the other hand, a negative electrode tab 62 extends from the lower end of the electrode assembly 14. The negative electrode tab 62 is connected to, for example, the end portion of the negative electrode 12 in the longitudinal direction. The negative electrode tab 62 extends toward the bottom surface portion 20B of the case 20, and is welded to the inside of the bottom surface portion 20B of the case 20. Accordingly, the case 20 functions as a negative electrode external terminal.

Also in the power storage device 60, similar to the power storage device 10, the first explosion-proof mechanisms (thin-wall portions 34A) are respectively formed at the corner portions of the sealing assembly 30, and the upper insulating plate 17 is formed to have a circular shape with a diameter substantially similar to that of the electrode assembly 14 viewed from the axial direction. Accordingly, the reliability of the power storage device 60 can be improved. Similar to the power storage device 40, the first explosion-proof mechanisms (thin-wall portions 21A) may be respectively formed at the corner portions of the bottom surface portion 20B of the case 20, and the lower insulating plate 18 may be formed to have a circular shape with a diameter substantially similar to that of the electrode assembly 14 viewed from the axial direction. Furthermore, similar to the power storage device 50, the pipes 22 may be respectively disposed in corner portion spaces that are the gaps between the electrode assembly 14 and the case 20.

### [Another Embodiment (Power Storage Device (Rivet Structure))]

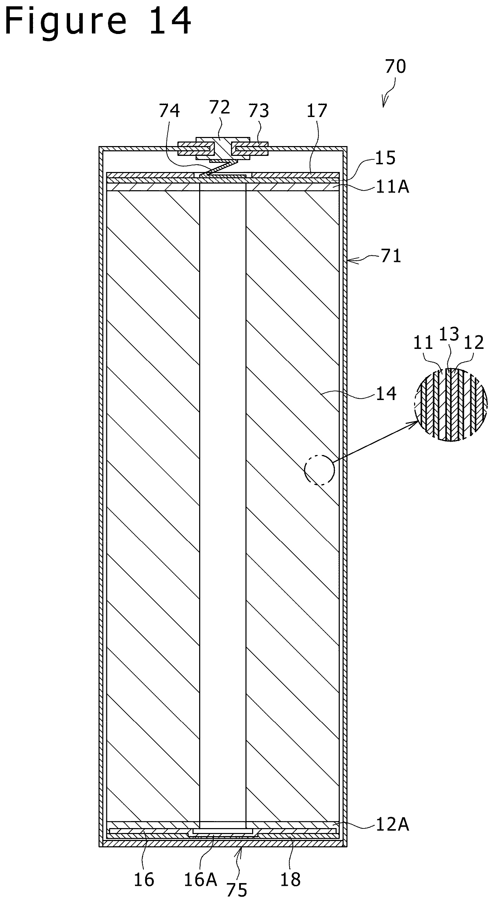

Referring to FIG. 14, a power storage device 70 that is another example of the embodiment is described. In the following description, components similar to those in the aforementioned power storage device 10 are assigned the similar symbols and described, or the description is omitted.

The power storage device 70 comprises: the cylindrical-shaped electrode assembly 14 that includes the strip-shaped positive electrode 11 and the strip-shaped negative electrode 12 that are wound with the strip-shaped separator 13 interposed therebetween; electrolyte (not shown); the case 71 that has a polygonal prism shape (a quadrangular prism shape in the present embodiment) and stores the electrode assembly 14 and electrolyte; a rivet 72 that is provided in the top surface portion of the case 71 and serves as a positive electrode external terminal; and a sealing assembly 75 that has a polygonal shape (a quadrangular shape in the present embodiment) and blocks the opening portion of the bottom surface side of the case 20. The positive electrode current collector plate 15 and the upper insulating plate 17 are provided on the upper side of the electrode assembly 14. On the other hand, the negative electrode current collector plate 16 and the lower insulating plate 18 are provided on the lower side of the electrode assembly 14. The negative electrode current collector plate 16 joined to the negative electrode core exposed portion 12A of the negative electrode 12 passes through the lower insulating plate 18, and is electrically connected to the sealing assembly 75. The outer peripheral edge of the sealing assembly 75 may be joined by welding or the like to the opening on the lower side of the case 71.

The rivet 72 is made of metal. The rivet 72 is fixed to the opening portion formed in the top surface portion of the case 71 via an insulating member 73. The positive electrode current collector plate 15 is joined to the bottom surface of the rivet 72 by the positive electrode tab 74, and the rivet 72 functions as a positive electrode external terminal.

Also in the power storage device 70, similar to the power storage device 10, the first explosion-proof mechanisms (thin-wall portions) are respectively formed at the corner portions of the sealing assembly 75, and the upper insulating plate 17 is formed to have a circular shape with a diameter substantially similar to that of the electrode assembly 14 viewed from the axial direction. Accordingly, the reliability of the power storage device 60 can be improved.

Also in the power storage device 70, similar to the power storage device 60, a positive electrode tab that electrically connects the positive electrode 11 and the rivet 72 to each other, and a negative electrode tab that electrically connects the negative electrode 12 and the case 71 to each other may be provided instead of the positive electrode current collector plate 15 and the negative electrode current collector plate 16.

Note that the present disclosure is not limited to the aforementioned embodiments and their modified examples, and it is a matter of course that various change and improvement can be made in a scope of the items described in the claims of the present application.

### REFERENCE SIGNS LIST

10, 40, 50, 60, 70 Power storage device, 11 Positive electrode, 11A Positive electrode core exposed portion, 12 Negative electrode, 12A Negative electrode core exposed portion, 13 Separator, 14 Electrode assembly, 15 Positive electrode current collector plate, 15A Projection, 16 Negative electrode current collector plate, 16A Projection, 17 Upper insulating plate, 18 Lower insulating plate, 20 Case, 20B Bottom surface portion, 21A, 21H, 34A, 34B, 34C, 34D, 34E, 34F, 34G Thin-wall portion (first explosion-proof mechanism), 21H Thin-wall portion (first explosion-proof mechanism), 22 Pipe, 30, 75 Sealing assembly, 31 Lid plate, 31A Annular portion, 32 Sealing plate, 32A Outer peripheral portion, 32B Center portion, 32C Thin-wall portion (second explosion-proof mechanism), 33 Gasket, 56 Rivet, 61 Positive electrode tab, 62 Negative electrode tab, 71 Case, 72 Rivet, 73 Insulating member, 74 Positive electrode tab

## Claims

1. A power storage device, comprising:
an electrode assembly in which a positive electrode, a negative electrode, and a separator are wound;
a polygonal prism-shaped case that includes a prism portion having a polygonal prism shape, and an opening portion provided at one end of the prism portion, and stores the electrode assembly and an electrolytic solution; and
a sealing assembly that has a polygonal shape and blocks the opening portion of the case, wherein
a corner portion of a bottom surface portion of the case or a corner portion of the sealing assembly is provided with an explosion-proof mechanism that releases gas in the case to the outside.

2. The power storage device according to claim 1, further comprising
a first insulating plate and a second insulating plate that are respectively disposed on opposite sides of the electrode assembly in an axial direction, wherein
the first insulating plate is closer to the explosion-proof mechanism than the second insulating plate is, and
the first insulating plate has a surface extending in a direction perpendicular to the axial direction, the surface having a smaller area than that of the second insulating plate.

3. The power storage device according to claim 2, wherein
the first insulating plate is circular, and
the second insulating plate is polygonal.

4. The power storage device according to any one of claims 1 to 3, wherein
the case includes a prism portion that extends in an axial direction, and the opening portion at one end of the prism portion, and
a hollow pipe is disposed in a corner portion space between a corner portion of the prism portion of the case and the electrode assembly.

5. The power storage device according to any one of claims 1 to 4, wherein
the case includes a prism portion that extends in an axial direction, and the opening portion at one end of the prism portion, and
a corner portion space between a corner portion of the case and the electrode assembly, and the explosion-proof mechanism overlap in the axial direction.

6. The power storage device according to any one of claims 1 to 5, wherein
the explosion-proof mechanism includes a groove-shaped thin-wall portion formed along a diagonal line of the polygonal shape.

7. The power storage device according to any one of claims 1 to 6, wherein
the explosion-proof mechanism includes a groove-shaped thin-wall portion formed along an outer periphery of the polygonal shape.

8. The power storage device according to any one of claims 1 to 7, wherein
the negative electrode includes metal lithium foil.

9. The power storage device according to any one of claims 1 to 8, wherein
a silicon-based material that contains 10% or more silicon by weight is used as a negative-electrode active material of the negative electrode.

10. The power storage device according to claim 9, wherein
irregularities are formed on a surface of the separator.

11. The power storage device according to any one of claims 1 to 10, wherein
the electrode assembly includes a wound core having the polygonal shape viewed from an axial direction.
